# EUROPEAN PATENT APPLICATION

(11) **EP 2 385 079 A1**
(43) Date of publication of application: **09.11.2011**
(21) Application number: 10003911.4
(22) Date of filing: 13.04.2010
(51) Int. Cl.: C08J 9/00, B32B 5/18, B32B 11/04, E04D 5/10

(54) **Bitumen polyolefin foam and its production**

(71) Applicant: Sekisui Alveo AG, 6002 Luzern (CH)
(72) Inventor: Claessen, Ton, 6031 EM Nederweert (NL); Kilcher, Giona, Dr., 8003 Zürich (CH); Eberl, Joachim, Dr., 6005 Lucerne (CH)
(74) Representative: Strehl Schübel-Hopf & Partner

(57) **Abstract**

The present invention relates to a production process of bitumen polyolefin foam, the bitumen polyolefin foam obtainable by this process and a laminate containing the bitumen polyolefin foam. The production process comprises introducing bitumen, an olefin polymer and/or olefin copolymer, a foaming agent, and and optional additives into an extruder, performing an extrusion to obtain an extruded sheet, and foaming the extruded sheet.

## Description

The present invention concerns a production process of bitumen polyolefin foam, the bitumen polyolefin foam obtainable by this process and a laminate containing the bitumen polyolefin foam. The bitumen polyolefin foam shows particular physical and chemical properties differing from pure polyolefin foam and pure bituminous foam.

### Background of the Invention

Bitumen is well known as sheet for sealing flat roofs against moisture. Those sheets are usually sensitive against mechanical stress, embrittle at low temperatures, and soften when exposed to strong sun irradiation. On this account bitumen sealing sheets are laid as multiple layers to ensure their functionality.

Polymer sealing sheets have been introduced in the market to overcome most of the disadvantages of bitumen multilayer. Because of cost reasons only single layers of polymer sheets have been applied for roof sealing. As a result the protection against moisture is much more dependent on undamaged sheets as in the case of multiple layers of bitumen sealing.

Since also polymer sealing sheets undergo natural aging processes which may lead to brittleness of the product, polymer sheets covered on at least one surface with bitumen have been developed. By applying this product, the advantages of polymers in view of elasticity and thermal fluctuation were combined with the enhanced moisture protection properties of bitumen multilayer, wherein these can be bonded together by flame treatment. Polymer sealing sheets which are coated with bitumen on at least one side and their preparation are described in CH 619 642 A5. Bituminous foam itself is applied particularly in the road construction sector. Coal tar binder was foamed for application in grouting techniques and for stabilisation of road bases. To this end, the crude tar is heated to about 120°C under pressure by superheated steam before a low wet steam is injected into the vessel. The foam is generated by discharging through a hand lance or spray bar jets. The preparation of bituminous foam was further optimized by developing new equipments or processes and by adding additives to stabilize the bituminous foam. Different methods of producing bituminous foam are described in JP 62172039 A, WO 95/22661 A1, WO 00/68302 A1, CA 2443833 C, and WO 2008/023982 A3.

EP 0363603A2 discloses the production of asphalt or other bituminous mixtures into which small amount of polymer are admixed. The product cannot be regarded as foam which can be present in the form of sheets or blocks, but is a typical bitumen product used for road construction works which is applied in liquid or viscous form.

The processes currently known for the production of bitumen foams present several disadvantages. In particular, the mixture comprising bitumen and water is heated above 100 °C in an autoclave, thus being potentially hazardous due to the violent reaction between bitumen and water under these conditions. Furthermore, complicated apparatus not readily available are used for processing the bitumen foam.

The heat bonding between polyolefin foams and polymer substrates made of bitumen or containing bitumen is difficult to achieve under standard application conditions or without the use of additional materials. The presence of low molecular weight components on the substrate made of bitumen or containing bitumen prevent the interpenetration of the polymer chains between the two surfaces. To the skilled person, it is known that waxes of low molecular weight are commonly used as anti-blocking agents for polyethylene films because they prevent chain interpenetration.

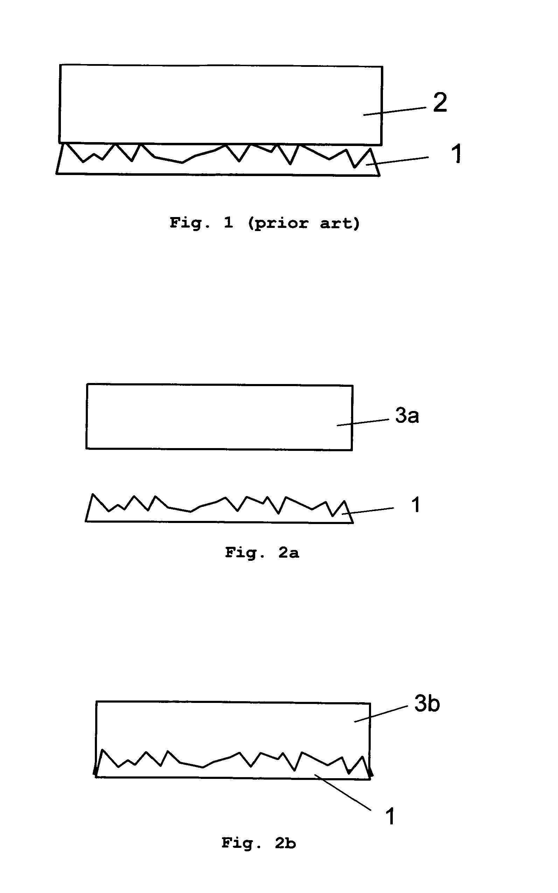

Also, the heat lamination of non-compressible polymer sheets to non-compressible substrates made of bitumen or containing bitumen leads to weak bonding strength when the morphology, or roughness, of at least one of the two surfaces involves a drastic reduction of the surface contact. The prevention of a complete surface coverage is schematically depicted in Fig. 1.

### Figures

Fig. 1 shows schematically the small surface contact area encountered when bonding a non-compressible polymer sheet to (non-compressible) a bitumen based substrate when the bitumen based substrate has a rough surface morphology.
Fig. 2a shows a bitumen based substrate having a rough surface morphology and uncompressed bitumen foam of the present invention before bonding.
Fig. 2b shows the state after heat bonding the bitumen foam of the present invention to the bitumen based substrate.
Fig. 3 shows a laminate according to the present invention where a bitumen based substrate 1 is bonded to another substrate 4 through the bitumen polyolefin foam of the present invention. The bonding between the bitumen polyolefin foam and the second substrate can be through an adhesive layer (such as a pressure sensitive adhesive) or by heat lamination or any other means known to a skilled person.
Fig. 4 shows the compression stress/strain of a high expansion bitumen foam (density 65.5 kg/m³) determined according ISO 3386-1.

### Reference numbers in the figures

- 1:: Bitumen based substrate
- 2:: Incompressible polymer sheet
- 3a:: Uncompressed bitumen polyolefin foam
- 3b:: Compressed bitumen polyolefin foam heat-bonded to substrate 1
- 4:: Second substrate

### Detailed description of the present invention

The present invention describes a novel production process for the production of cross-linked and non cross-linked foams containing bitumen and polyolefin.

Specifically, the present invention relates to:
A process for producing bitumen polyolefin foam, comprising the following steps:
   a. introducing (A) 0.001 to 90.0 parts by weight of bitumen; (B) 10.0 to 99.999 parts by weight of an olefin polymer and/or olefin copolymer, the total of (A) and (B) being 100 parts by weight; and, in relation to 100 parts by weight of (A) and (B), (C) 0.1 to 40.0 parts by weight of a foaming agent, and (D) 0 to 25.0 parts by weight of additives into an extruder, and performing an extrusion to obtain an extruded sheet; and
   b. foaming the extruded sheet.

Herein, the concentration of bitumen is from 0.001 to 90.0 parts by weight, preferably from 1.0 to 50.0 parts by weight, more preferably from 5.0 to 40.0 parts by weight, even more preferably from 10 to 30 parts by weight, based on 100 parts by weight of (A) and (B).

The term "bitumen" is known to the skilled person and relates to a mixture of organic liquids that are highly viscous, black, sticky, entirely soluble in carbon disulfide, and composed primarily of highly condensed polycyclic aromatic hydrocarbons.

The concentration of the olefin polymer and/or copolymer ranges from 10.0 to 99.999 parts by weight, preferably from 50.0 to 99.0 parts by weight, more preferably from 60.0 to 95.0 parts by weight, even more preferably from 70.0 to 90 pats by weight, based on 100 parts by weight of (A) and (B).

The kind of polyolefin is not particularly limited and can be made of a homopolymer of a monomer, and/or a copolymer. For example, the following can be preferably used: a polyethylene-based polymer; a polypropylene-based polymer; an olefin copolymer such as an ethylene-vinyl acetate copolymer (EVA), an ethylene-methyl acrylate copolymer (EMA), and an ethylene-butyl acrylate copolymer (EBA), EPDM, and a polyethylene/polypropylene rubber. A polyolefin-based polymer having, as a main component, a polyethylene-based polymer, a polypropylene-based polymer, or a mixture of a polyethylene-based polymer and a polypropylene-based polymer is preferable. A main component means that one of the polyethylene-based polymer and the polypropylene-based polymer, or both of them are contained in the polyolefin-based polymer at a total amount 50 % by weight or more.
The polyethylene-based polymer is not particularly limited, and examples include very low density polyethylene (VLDPE), low density polyethylene (LDPE), medium density polyethylene, high density polyethylene (HDPE), linear low density polyethylene (LLDPE), linear medium density polyethylene, and linear high density polyethylene, and these may be used alone, or may be used together.
In addition, the polypropylene-based polymer is not particularly limited, but examples include a propylene homopolymer, and a copolymer of propylene and other olefin, and these may be used alone, or two or more kinds of them may be used together. In addition, a copolymer of propylene and other olefin may be any of a block copolymer, a random copolymer, and a random block copolymer.
In addition, examples of olefin to be copolymerized with propylene include α-olefins such as ethylene, 1-butene, 1-pentene, 4-methyl-1-pentene, 1-hexene, 1-octene, 1-nonene, and 1-decene.
Preferred types of polymers are PE, PP and EVA copolymers. In a preferred embodiment, the component (A) is a mixture of polyethylene and EVA.

The total concentration of all additives, including the foaming agent, ranges from 0.1 to 65 parts by weight in relation to 100 parts by weight of the total of (A) and (B), in a preferential embodiment from 0.5 to 30 parts by weight.

A required additive is the foaming agent (component (C)). The type of foaming agent is not particularly restricted. Examples of foaming agents which can be used in the present invention are azodicarbonamide, citric acid, sodium bicarbonate, water, water vapour, ethane, methane, propane, butane, pentane, hexane, heptanes, octane, carbon dioxide, their derivatives and other components commonly used for the production of foams. A preferred foaming agent in the process of the present invention is azodicarbonamide, particularly if the process comprises a cross-linking step, and iso-butane is preferred for the case comprising no cross-linking step.

The foaming agent is used in an amount of 0.1 to 40.0 parts by weight based on the total of components (A) and (B), preferably 0.5 to 20.0 parts by weight.

Other additives can be applied to control the rheological properties of the melt (lubricants) such as zinc stearates, glycol monostearates and similar derivatives, eurocamide and similar derivatives, low molecular weight waxes and similar derivatives, fluorinated polymers and similar derivatives. The use of such lubricants is preferable since they contribute to avoid prefoaming when the mixture leaves the extruder.
Lubricants are preferably used in an amount of 0.01 to 5.0 parts by weight based on the total of components (A) and (B), preferably 0.1 to 3.0 parts by weight.

Other additives can be applied to control the colour of the foams (coloring agents).
Coloring agents are preferably used in an amount of 0.01 to 5.0 parts by weight based on the total of components (A) and (B), preferably 0.1 to 3.0 parts by weight.

Still other additives can be applied to stabilize the foam, such as radical stabilizers, antioxidants, UV-stabilizers, heat-stabilizers as well as fire retardants and promoters of electrical conductivity. These additives are preferably used in an amount of 0.01 to 15.0 parts by weight based on the total of components (A) and (B), preferably 0.05 to 10.0 parts by weight.

The total amount of all other additives (except foaming agent) is preferably 0.1 to 15.0 parts by weight in relation to 100 parts by weight of the total of components (A) and (B).

The production process is based on the extrusion of a mixture comprising the polymer resin, the bitumen, the foaming agent and possibly other additives to obtain an extruded sheet or crude sheet.

The apparatus for performing the extrusion is not particularly limited. Examples for the extruder are single-screw and twin-screw extruders. Examples of their application methods are film extrusion, blown film extrusion, overjacketing extrusion, tubing extrusion, coextrusion and extrusion coating. Preferred is single- and twin-scew extrusion.

The extrusion process is used to thoroughly mix the bitumen with the foaming agent, the optional other additives, and the olefin homopolymer and/or copolymer. The olefin homopolymer and/or copolymer is general added to the extruder in the form of granulates. In one embodiment of the process of the present invention, the extrusion should preferably be performed under such conditions that no or essentially no prefoaming occurs when the extruded mixture leaves the extruder as a sheet. To this end, the addition of above mentioned lubricants is preferable. Particularly in the embodiment of the process of the present invention comprising a cross-linking step, foaming should occur only or essentially only in step b.

The extrusion is generally performed at a temperature of from 110°C to 160°C. A preferred temperature range is from 130 to 150°C. The pressure of extrusion is generally from 40 to 110 bar. A preferred pressure range is from 75 to 90 bar.

The production process of the bitumen foam preferably, but not necessarily, includes a cross-linking step after the extrusion and prior to the foaming process, for cross-linking the polymer chains. The cross-linking can be a chemical cross-linking or a physical cross-linking. Physical cross-linking is preferred. The methods of physical cross-linking and chemical cross-linking described in WO 2006/043570 can generally be applied.

In physical cross-linking, the extruded sheet is irradiated with radiation such as an electron beam to impart a cross-linked structure to the extruded sheet. γ-radiation is another possibility. When electron irradiation is used as a means for imparting a cross-linked structure to the extruded sheet, a foamed sheet obtained by foaming the extruded sheet has fine closed cells and, at the same time, an excellent surface smoothness.

If the irradiation dose of an electron beam to the crude sheet is too small, a necessary cross-linked structure can not be imparted to the extruded sheet in some cases. On the other hand, when the dose is too large, cross-linking is applied too much to the extruded sheet, and foamability of the extruded sheet is reduced in some cases. Therefore, the dose is preferably 0.1 to 30 Mrad, more preferably 0.2 to 20 Mrad, particularly preferably 0.3 to 15 Mrad.

In addition, an acceleration voltage for electron beam may be appropriately adjusted depending on the thickness of the extruded sheet, and an electron beam may be irradiated on only on one side or both sides of the extruded sheet. In order to uniformly cross-link the extruded sheet in its thickness direction, it is preferable to irradiate both sides of the extruded sheet with an electron beam at the same acceleration voltage and the same irradiation dose.

In the foaming step, the extruded sheet is heated to a temperature at which the foaming agent decomposes or expands. Thereby, a foamed sheet comprising bitumen and a polyolefin polymer is produced exhibiting a processing skin layer on both sides of this foamed sheet.

The temperature in the foaming step generally depends on the used foaming agent, and the foaming step is generally performed at a temperature of from 0 to 350°C, preferably 120 to 350°C, more preferably 200 to 300 °C, and more preferably from 200 to 250°C.

With the process of the present invention, generally foams with an expansion factor of from 2 to 60, preferably from 3 to 50, more preferably from 3 to 40, can be obtained although the present invention is not restricted thereto. The expansion factor is calculated as the ratio between the average polyolefin density and the foam density.

As another embodiment of the process of the present invention for producing bitumen polyolefin foam, direct extrusion foaming can be applied. Therefore a mixture comprising (A) 10.0 to 40.0 parts by weight of bitumen, (B) 60.0 to 90.0 parts by weight of an olefin polymer and/or olefin copolymer, the total of (A) and (B) being 100 parts by weight, and (D) 0 - 5 parts by weight of additive masterbatch is processed in the extruder. At the end of the extruding device, prior to the extrusion die, (C) 0.1 - 15 parts of foaming agent are injected into the melt. Finally, the invented bitumen foam is directly produced after exiting the die's outlet. Thus, it is not necessary in the process of the present invention that all components to be mixed are added at the entrance of the extruder, but the foaming agent could be added just before the exit of the extruder.

The extrusion is generally performed at a temperature of from 100°C to 150°C. Preferred temperature range is from 100 to 130°C. The pressure of extrusion is generally from 40 to 100 bar. Preferred pressure range is from 60 to 80 bar.

The present invention also relates to bitumen polyolefin foam obtainable by the process of the present invention.

The method of the present invention allows the production of bitumen foams having a wide range of density such as from 10 to 500 kg/m³, in a preferred embodiment from 25 to 330 kg/m³, more preferably from 50 to 100 kg/m³.

The thickness of the foam obtained by the process of the present invention can be in a wide range and is generally in a range of from 0.1 to 20 mm, in a preferred embodiment from 0.5 to 10 mm.

The thickness tolerance ranges between 0.5 and 20 %, in a preferred embodiment between 2 and 15 %. The thickness of the foam is determined in accordance to ISO-1923. The thickness tolerances are based on 10 individual measurements in cross-direction of the foam and on the statistical basis of 3 sigma tolerances.

The bitumen polyolefin foam produced according to the present invention generally has an average cell size of from 0.01 to 5 mm, preferably 0.05 to 2 mm, more preferably from 0.1 to 1 mm. The cell size is determined through optical or electron microscopy or any imaging method known to the skilled person. The cell size and cell size distribution is determined based on 100 individual measurements and on the statistical basis of 3 sigma tolerances.

The bitumen polyolefin foam according to the present invention can be produced in the form of a sheet, block, plate or film. Further, it can be formed into a roll which has advantages for transport and for applying the foam.

The bitumen polyolefin foam according to the present invention can be produced as continuous sheets, but can also be cut to predetermined lengths.

The surface properties of bitumen foam allow to strongly bond or laminate the material to surfaces consisting of bitumen or containing bitumen or consisting of polymer or containing polymer by no other means but heat. The bonding is immediate and permanent. Bonding by heat can be achieved for example by flame lamination.

Due to its formulation the bitumen foam of the present invention specifically allows a permanent bonding to substrates made of bitumen or containing bitumen as well as substrates made of polymer or containing polymer.

Due to the enhanced compressibility of the bitumen foam, having a compression modulus between 0.1 and 10.0 MPa (determined according to ISO 3386-1) and a compression strength at 25 % compression which can readily be below 100 kPa and be as low as 1 kPa (determined according to ISO 3386-1) contrary to stiff extruded sheets which are not foamed and exhibit a compression modulus between 100 and 2000 MPa, the foam according to the present invention nestles well to rough surfaces and enables therefore a strong permanent bonding. Although compression strengths below 100 kPa are preferred in view of a bonding to rough surfaces, the present invention nevertheless also covers bitumen polyolefin foams with higher compression strengths such as 100 to 2000 kPa.

The present invention also relates to a laminate containing the bitumen polyolefin foam of the present invention or produced according to the method of the present invention as at least one layer. Preferably, the bitumen polyolefin foam layer in such a laminate is in direct contact with a layer (substrate) containing or consisting of bitumen.

If the polyolefin bitumen foam layer is also bonded to another substrate or layer on the other side, the bonding to that other layer may be direct using heat, for example by flame lamination, or the bonding may be via an adhesion promoter such as a pressure-sensitive adhesive, primers, sealants or adhesive tapes.

The bitumen polyolefin foam layer may preferably be present as an interlayer between, and in contact with, a non-compressible plastic layer made of an olefin polymer and/or olefin copolymer and a layer of a substrate consisting of or containing bitumen.

The present invention also preferably relates to a laminate wherein the bitumen polyolefin foam of the present invention is heat-bonded to a bitumen carpet backing.

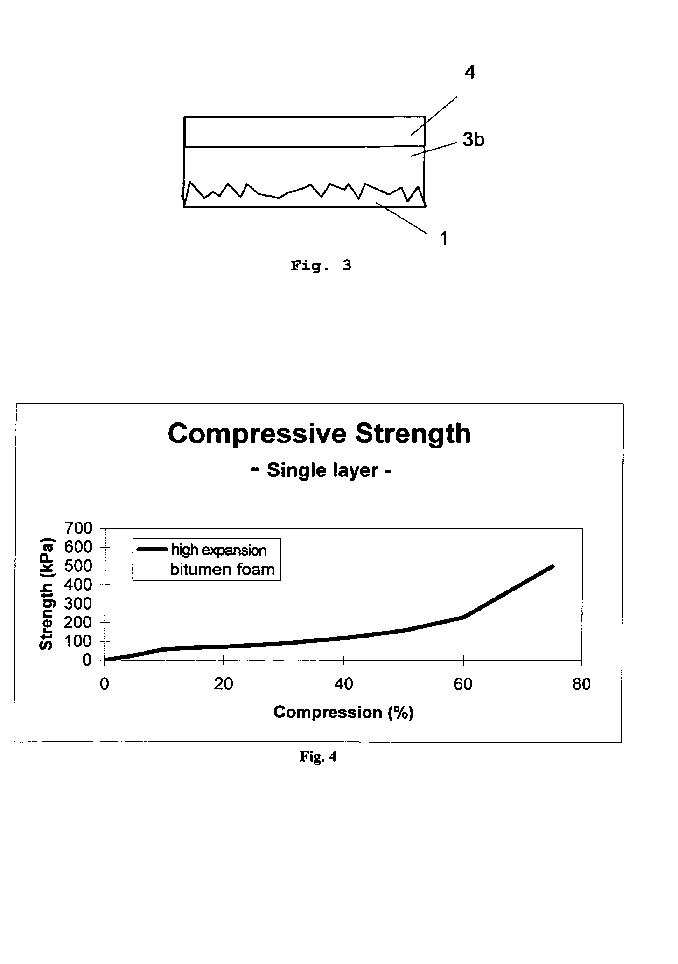

The physical properties of the bitumen polyolefin foam of the present invention, such as the compressibility (Fig. 4) and flexibility, allow the material to maximise the surface contact with surfaces presenting an uneven morphology or roughness. This is shown in Fig. 2a , 2b and 3. Fig. 2a shows a bitumen based substrate 1 having a rough surface morphology and uncompressed bitumen foam of the present invention 3a before bonding. Fig. 2b shows the state after heat bonding the bitumen foam of the present invention 3b to the bitumen based substrate 1.

Fig. 3 shows a laminate according to the present invention where a bitumen based substrate 1 is bonded to another substrate 4 through the bitumen polyolefin foam of the present invention. The bonding between the bitumen polyolefin foam and the second substrate can be through an adhesive layer (such as a pressure sensitive adhesive) or be a direct bonding by heat lamination or any other means known to a skilled person.

In one embodiment of the present invention, the bitumen polyolefin foam having a density range of 50-100 kg/m³ is permanently bonded by heat lamination (temperature range 80 - 300 °C, preferably between 90 and 200, more preferably between 100 and 150 °C) to a bitumen carpet backing. The carpet backing surface can present a thickness variation between 0.1 - 5 mm from the surface mean average profile. A permanent and spontaneously irreversible bond is obtained. Removing the bitumen foam always causes a cohesive break of the cellular material. The cohesive break was visually evaluated by a skilled person.

In another embodiment of the present invention, the bitumen polyolefin foam having a density range of 50-100 kg/m³ is permanently bonded by heat lamination (temperature range 80 - 300 °C, preferably between 90 and 200, more preferably between 100 and 150 °C) to a bitumen sheet containing an inert filler. The surface can present a variation of the thickness ranging between 0.1 - 5 mm from the surface mean average profile. A permanent and spontaneously irreversible bond is obtained. Removing the bitumen foam always causes a cohesive break of the cellular material. The cohesive break was visually evaluated by a skilled person.

In another embodiment of the present invention, the bitumen polyolefin foam having a density range of 50-100 kg/m³ is applied as interlayer between a non-compressible plastic layer made of poly(ethylene) and a surface consisting of bitumen or containing bitumen. The surface can present a variation of the thickness ranging between 0.1 - 5 mm from the surface mean average profile. The bitumen foam is either simultaneously or stepwise bonded by heat lamination

(temperature range 200 - 500 °C) to the two surfaces to create an irreversible bond. Alternatively the lamination of the bitumen foam to the poly(ethylene) sheet can be accomplished by the means of an additional layer such as a pressure sensitive adhesive, a structural adhesive or sealant, a primer or any other component that chemically and physically enhances the bonding.

### Examples

### Example 1

A bitumen polyolefin foam exhibiting a high expansion and a low bitumen content was prepared by mixing 53.3 parts EVA (co-polyethylene-polyvinylacetate), 16.8 parts polyethylene granulate, 29.9 parts bitumen-containing masterbatch (includes 42 % bitumen, i.e. 12.6 parts by weight of bitumen in relation to the total of olefin (co)polymer and bitumen, and 58 % of co-polyethylene-polyvinylacetate, i.e. 17.3 parts by weight of olefin (co)polymer in relation to the total of olefin (co)polymer and bitumen), 15.0 parts foaming agent and 7.4 parts additive masterbatch. The crude sheet was extruded by a twin-screw extruder applying a barrel temperature of 140 °C and a pressure of 84 bar. The intermediate product was physically cross-linked using a device which generates an electron beam of about 8 Mrad and applying a throughput speed of about 30 m/min. Final foaming of the cross-linked sheet was performed in a vertical foaming oven at a temperature of 250 °C obtaining a product which shows a density of 71.8 kg/m³, corresponding to an expansion factor of 13.9 (calculated as ratio between the resin and the foam density), a compression strength at 25 % compression of 83 kPa (determined according to ISO 3386-1), and a compression modulus of 0.8 MPa (determined according to ISO 3386-1).

### Example 2

A foam with a high bitumen content and high expansion was obtained by mixing 1.2 parts EVA (co-polyethylene-polyvinylacetate), 1.2 parts polyethylene granulate, 97.6 parts bitumen-containing masterbatch (includes 42 % bitumen, i.e. 40.8 parts by weight of bitumen in relation to the total of olefin (co)polymer and bitumen, and 58 % of co-polyethylene-polyvinylacetate, i.e. 56.6 parts by weight of olefin (co)polymer in relation to the total of polyolefin and bitumen), 14.0 parts foaming agent and 7.0 parts additive masterbatch. The crude sheet was extruded by a twin-screw extruder applying a barrel temperature of 140 °C and a pressure of 84 bar. The intermediate product was physically cross-linked using a device which generates an electron beam of about 8 Mrad and applying a throughput speed of about 30 m/min. Final foaming of the cross-linked sheet was performed in a vertical foaming oven at a temperature of 250 °C obtaining a product which shows a density of 65.5 kg/m³, corresponding to an expansion factor of 15.3 (calculated as ratio between the resin and the foam density), a compression strength at 25 % compression of 79 kPa (determined according to ISO 3386-1) and a compression modulus of 0.7 MPa (determined according to ISO 3386-1).

### Example 3

A foam with a low bitumen content and low expansion was obtained by mixing 48.8 parts EVA(co-polyethylene-polyvinylacetate), 23.8 parts polyethylene granulate, 27.4 parts bitumen-containing masterbatch (includes 42 % bitumen, i.e. 11.5 parts by weight of bitumen in relation to the total of olefin (co)polymer and bitumen, and 58 % of co-polyethylene-polyvinylacetate, i.e. 15.9 parts by weight of olefin (co)polymer in relation to the total of olefin (co)polymer and bitumen), 2.7 parts foaming agent and 6.8 parts additive masterbatch. The crude sheet was extruded by a twin-screw extruder applying a barrel temperature of 140 °C and a pressure of 84 bar. The intermediate product was physically cross-linked using a device which generates an electron beam of about 8 Mrad and applying a throughput speed of about 30 m/min. Final foaming of the cross-linked sheet was performed in a vertical foaming oven at a temperature of 250 °C obtaining a product which shows a density of 185 kg/m³, corresponding to an expansion factor of 5.4 (calculated as ratio between the resin and the foam density), a compression strength at 25% compression of 265 kPa (determined according to ISO 3386-1) and a compression modulus of 3.3 MPa (determined according to ISO 3386-1).

## Claims

1. A process for producing a bitumen polyolefin foam, comprising the following steps:
a. introducing (A) 0.001 to 90.0 parts by weight of bitumen; (B) 10.0 to 99.999 parts by weight of an olefin polymer and/or olefin copolymer, the total of (A) and (B) being 100 parts by weight; and, in relation to 100 parts by weight of (A) and (B), (C) 0.1 to 40.0 parts by weight of a foaming agent, and (D) 0 to 25.0 parts by weight of additives into an extruder, and performing an extrusion to obtain an extruded sheet, and
b. foaming the extruded sheet.

2. The process according to claim 1, wherein the amount of the bitumen (A) is from 1.0 to 50 parts by weight.

3. The process according to claim 1 or 2, wherein the amount of the olefin polymer and/or copolymer (B) is from 50 to 99.0 parts by weight.

4. The process according to any one of claims 1 to 3, wherein the amount of foaming agent (C) is from 0.5 to 20.0 parts by weight.

5. The process according to any one of claims 1 to 4,
wherein the additive (D) is a lubricant,a coloring agent, a stabilizer, a fire retardant or a promoter of electrical conductivity.

6. The process according to claim 5, wherein the lubricant, coloring agent, stabilizer, fire retardant or promoter of electrical conductivity is contained in the mixture in an amount of from 0.1 to 15.0 parts by weight in relation to 100 parts by weight of (A) and (B).

7. The process according to any one of claims 1 to 6, comprising a step of cross-linking the extruded sheet obtained in step a. prior to step b.

8. The process according to any one of the preceding claims, wherein the extrusion is performed at a temperature of from 110 to 160°C and at a pressure of from 40 to 110 bar.

9. The process according to any one of the preceding claims, wherein the foaming is performed at 0 to 350°C.

10. Bitumen polyolefin foam, obtainable by the process of any one of claims 1 to 9.

11. Bitumen polyolefin foam according to claim 10, having a density of from 10 to 500 kg/cm³, preferably from 25 to 330 kg/cm³, more preferably from 50 to 100 kg/cm³.

12. Bitumen polyolefin foam according to claim 10 or 11, having an average cell size of from 0.01 to 5 mm in diameter, preferably 0.1 to 1 mm.

13. Bitumen polyolefin foam according to any one of claims 10 to 12, wherein the foam is in the form of a sheet, block, plate or film, which can be present in the form of a roll, respectively.

14. Laminate, comprising the bitumen polyolefin foam according to any one of claims 10 to 13 as at least one layer.

15. Laminate according to claim 14, wherein said bitumen polyolefin foam layer is in contact with a substrate consisting of bitumen or containing bitumen, in contact with a substrate consisting of polymer or containing polymer, or in contact with a substrate consisting of bitumen or containing bitumen and a substrate consisting of polymer or containing polymer.

16. Laminate according to claim 14 or 15, wherein said bitumen polyolefin foam layer is present as an interlayer between, and in contact with, a non-compressible plastic layer made of an olefin polymer and/or olefin copolymer and a substrate consisting of bitumen or containing bitumen.

17. Laminate according to any one of claims 14 to 16,
wherein said bitumen polyolefin foam layer is heat bonded to a bitumen carpet backing.
